(19) Europäisches Patentamt
European Patent Office
Office européen des brevets

(11) **EP 4 412 171 A1**

(12) **EUROPEAN PATENT APPLICATION**

(43) Date of publication:
**07.08.2024 Bulletin 2024/32**

(21) Application number: **23154452.9**

(22) Date of filing: **01.02.2023**

(51) International Patent Classification (IPC):
*H04L 41/0895* (2022.01)    *H04L 41/40* (2022.01)
*H04L 43/20* (2022.01)    *H04L 41/122* (2022.01)
*H04L 9/40* (2022.01)

(52) Cooperative Patent Classification (CPC):
**H04L 41/5054; H04L 63/0227; H04L 63/1458;
H04L 63/1483;** H04L 63/0807

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **British Telecommunications public
limited company
London E1 8EE (GB)**

(72) Inventor: **The designation of the inventor has not
yet been filed**

(74) Representative: **British Telecommunications
public limited company
Intellectual Property Department
9th Floor
One Braham
Braham Street
London E1 8EE (GB)**

(54) **SOFTWARE DEFINED NETWORKING**

(57)    A computer implemented method of selectively performing a function on network traffic over a software defined networking, SDN, network is provided. The method comprises receiving (601), at a node of the SDN network, network traffic comprising a ticket identifier, TID; comparing (603) the TID against a prestored list of TIDs and determining that the TID matches a TID in the prestored list of TIDs; determining (605), based on the TID, a function to be performed on the network traffic; performing the function on the network traffic; and sending (607) the network traffic to a subsequent node of the SDN network. Also provided is a computer implemented method for a software defined networking, SDN, network. The method comprises receiving (701) a SDN network functionality requirement specifying one or more functions to be applied to network traffic of the SDN network that matches one or more criteria; generating (703) a ticket, the ticket specifying the SDN network functionality requirement and having a ticket identifier, TID; and distributing (705) the ticket to one or more nodes of the SDN network. Corresponding devices and computer programs are also provided.

1. Generate ticket and assign ticket ID (TID)
2. Send ticket to Gateway
3. Distribute ticket to Nodes
SDN Controller
5. Traffic with TID going through Nodes
Gateway
Node 1
Node 2
4. Analyse traffic and attach TID to traffic
6. Match traffic with TID and apply the micro-functions in the ticket (identified by TID)

FIG. 5

**Description**

TECHNICAL FIELD

The invention relates to networking methods. In particular, the invention relates to methods, devices and systems for selectively performing functions on network traffic over a software defined network and controlling a software defined network.

BACKGROUND

Software Defined Networking (SDN) is a network architecture that allows the network infrastructure (composed of network devices, herein termed nodes) to be centrally controlled using software applications. The relevant network services such as routers, firewalls, etc. can be virtualised as Virtual Network Functions (VNF) on open computing platforms. Users' or customers' devices may then be connected (e.g., via a home gateway) to such a SDN and utilise various network services, allowing access to third-party services and applications hosted in the public Internet or in the cloud.

Current SDN networks rely on programming and configuring the VNFs (on each network node) to deliver the service based on a user's requirements that are derived from the Service Level Agreement (SLA) agreed with the Internet Service Provider (ISP). Such SLAs will typically specify the bandwidth, latency, security and other Quality of Service (QoS) parameters that are required for end-to-end service delivery. For example, high bandwidth and low latency will be required for delivering high-quality video streaming service.

New security-related services such as Intrusion Detection System (IDS) or Malware prevention service can be added dynamically as security functions on top of the existing virtualised network functions. However, there are currently following limitations: only full-fledged security functions with all functionalities (e.g., full IDS or Firewall function) can be deployed on the network nodes; and the requested (full-fledged) security functions, e.g., data encryption, would normally apply to all traffic of the (subscribing) users within the SDN network (i.e., not selected user traffic).

Consequently, this may lead to unnecessary high computing resource (e.g., RAM, CPU, bandwidth) usage to run the service/execute the functions at the nodes of the SDN; high operational cost (e.g., full licence cost of an IDS function deployment for each VNF) for the operator; and high traffic latency (e.g., due to the need to apply the full-fledged IDS function to all routed traffic)

SUMMARY OF INVENTION

The invention is defined in the independent claims. Embodiments of the invention are set out in the dependent claims.

According to a first aspect of the present disclosure, a computer implemented method of selectively performing a function on network traffic over a software defined networking, SDN, network is provided. The method comprises: receiving, at a node of the SDN network, network traffic comprising a ticket identifier, TID; comparing the TID against a prestored list of TIDs and determining that the TID matches a TID in the prestored list of TIDs; determining, based on the TID, a function to be performed on the network traffic; performing the function on the network traffic; and sending the network traffic to a subsequent node of the SDN network.

In this way, a node of an SDN network can perform required functions only on certain network traffic of the SDN network by matching the TID of the network traffic with a function indicated by the TID to be performed on the corresponding network traffic. This allows flexible roll out of precise functionality to specific types of network traffic passing through the SDN network, such as network traffic corresponding to a particular client or user of the SDN network.

In some examples, determining, based on the TID, a function to be performed on the network traffic comprises obtaining a ticket corresponding to the TID of the network traffic, wherein the ticket specifies one or more functions to be performed on network traffic having that TID. In this case, the ticket can be obtained from a local memory of the node or wherein the ticket is obtained from a database in response to a query comprising the TID. Obtaining a ticket in this manner provides a way in which functionality can be easily and flexibly applied to a node for specific network traffic.

Such a ticket can specify an order for the one or more functions to be performed. The network traffic may then further comprise a counter indicating the next function that should be performed. The counter can be incremented each time a function is performed on the network traffic, allowing the next function to be performed. This allows an efficient means to track the functions performed so far on the network traffic, and the next required function to be performed, without any form of central tracking or control of the network traffic.

In some examples, the TID may be applied to the network traffic by a gateway node of the SDN network. In particular, the TID may be applied to the network traffic if the network traffic meets one or more criteria associated with the TID. This ensures that whilst passing through the SDN network, the network traffic will be able to be identified by the nodes so that the required functionality can be performed. Furthermore, applying a TID at a gateway nodes means that only the gateway node need assess the properties of the network traffic to determine the required functions that need to be applied to it, rather than every node, subsequent nodes being able to rely on the TID.

In some examples, the network traffic is received from a preceding node that does not have the functionality to perform the function on the network traffic. Passing network traffic between nodes in this manner enables a node that can apply the required functionality to receive the network traffic.

In some examples, sending the network traffic to a subsequent node of the SDN network comprises determining a candidate node that can perform a next required function to the network traffic as the subsequent node. Preferably, the candidate node is a node directly connected to the node. Forwarding the network traffic to a node that can perform the next required function ensures that the required functionality is implemented for the network traffic efficiently.

In this case, determining a candidate node that can perform the next required function to the network traffic may comprise determining whether the candidate node has the functionality to apply the next required function to the network traffic and/or determining whether the candidate node has a current resource capacity to apply the next required function to the network traffic.

This may be performed by receiving, from each candidate node, information indicating whether that candidate node has the required functionality to apply the next required function to the network traffic and whether that candidate node has a current resource capacity to apply the next required function to the network traffic.

In the case that there are two or more candidate nodes connected to the node, if at least one candidate node is determined as having the required functionality and current resource capacity to apply the next required function to the network traffic, that candidate node is determined as the subsequent node. This ensures that the required functionality can be applied to the network traffic efficiently.

Alternatively, if at least one candidate node is determined as having the required functionality to apply the next required function to the network traffic but not a current resource capacity to apply the next required function to the network traffic, that candidate node is determined as the subsequent node but sending the network traffic to the subsequent node is delayed until the subsequent node indicates that it has the required resource capacity to apply the next required function to the network traffic. In this way, the subsequent node is not overloaded and the network traffic can be managed whilst still ensuring that the required functionality is implemented.

Alternatively, if no candidate node is determined as having the required functionality to apply the next required function to the network traffic, the candidate node having the highest resource capacity is determined as the subsequent node. This enables the network traffic to be forwarded onwards, eventually reaching a node that can perform the next required function, whilst having minimum impact on the functioning of the SDN network overall.

If it is determined that two or more candidate nodes can perform the next required function, the method may comprise determining the candidate node capable of applying the next required function in the least time as the subsequent node. This means that the functionality required is applied to the network traffic whilst having the least overall impact on the SDN network.

For example, the candidate node capable of applying the next required function in the least time may be determined using a machine learning model trained on previous applications of the function to network traffic. In particular, the machine learning model is one of a linear regression model and a polynomial regression model.

In this way, an accurate estimation of the time it will take a node to perform a function can be obtained, which can be specific to that node, or that type of node, based on the current state of the node. This allows the nodes of the SDN network to be used in the optimal manner.

In some examples, the function is a micro function. This enables precise functionality to be provided targeted precisely at particular nodes and for particular types of network traffic.

In addition or alternatively, the function may be a security function. For example, the function may be one of a web application attack detection function, a DDoS attack detection function, an SQL injection detection function, and a cross site scripting detection function.

According to a second aspect of the present disclosure, a computer implemented method for a software defined networking, SDN, network is provided. The method comprises receiving an SDN network functionality requirement specifying one or more functions to be applied to network traffic of the SDN network that matches one or more criteria; generating a ticket, the ticket specifying the SDN network functionality requirement and having a ticket identifier, TID; and distributing the ticket to one or more nodes of the SDN network. In this way, a controller of the SDN network can manage the nodes of the SDN network to ensure that the correct functionality is applied as required to network traffic.

In some examples, the method further comprises determining one or more expected network traffic paths for network traffic that matches the one or more criteria. In this case, the ticket is distributed to one or more nodes that are on the one or more expected network traffic paths. This enables an efficient use of the nodes of the SDN network by not requiring every node to check for every TID for each piece of network traffic, reducing the resource load on the nodes.

In some examples, the ticket may be distributed based on an expected traffic and resource capacity of each of the one or more nodes on the one or more expected network traffic paths. This enables an efficient use of the nodes of the SDN network by balancing the network load over the nodes of the SDN network.

In some examples, the method may further comprise distributing functions specified in the ticket to one or more nodes of the SDN network. Having a controller distribute functions means that not every node need have all functionalities, reducing the resource load on the nodes.

In this case, functions are preferably distributed to nodes along the expected network traffic path according to an order for the functions to be performed defined in the ticket. This means that the function is only distributed to the nodes of the SDN network that are most likely to need to apply the function, reducing the load on other nodes of the network and leaving them with more resource capacity to perform other functions, for example.

According to a third aspect of the present disclosure, a node for use in a software defined networking, SDN, network is provided. The node is configured to perform the method of the first aspect.

According to a fourth aspect of the present disclosure, a controller for a software defined networking, SDN, network is provided. The controller is configured to perform the method of the second aspect.

According to a fifth aspect of the present disclosure, a software defined networking, SDN, network comprising a plurality of nodes is provided. The SDN network is configured to perform the method of the first and/or second aspects.

According to a fifth aspect of the present disclosure, a computer program is provided. The computer program, when executed by one or more nodes of a SDN network, is configured to cause the one or more nodes to perform the method of the first aspect.

According to a sixth aspect of the present disclosure, a computer program is provided. The computer program, when executed by a controller of a SDN network, is configured to cause the controller to perform the method of the second aspect.

BRIEF DESCRIPTION OF THE DRAWINGS

The disclosure will be further described, by way of example only, with reference to the accompanying drawings, in which:

Figure 1 illustrates a software defined networking (SDN) network;
Figure 2 illustrates a SDN network implementing a function;
Figure 3 illustrates a SDN network implementing micro functions;
Figure 4 illustrates tickets for implementing functions on a SDN network;
Figure 5 illustrates how functions can be performed to network traffic on a SDN network using a ticket;
Figure 6 illustrates a method for selectively performing a function on network traffic over a SDN network;
Figure 7 illustrates a method for SDN;
Figure 8 illustrates a SDN network according to aspects of the invention;
Figure 9 illustrates a method of forwarding network traffic according to aspects of the invention;
Figure 10 illustrates a machine learning model; and
Figure 11 illustrates regression model output.

DETAILED DESCRIPTION OF THE INVENTION

Embodiments and related technology helpful for understanding and implementing the embodiments will now be described with reference to the Figures. The same or similar reference numerals are used to refer to the same or similar components across different Figures.

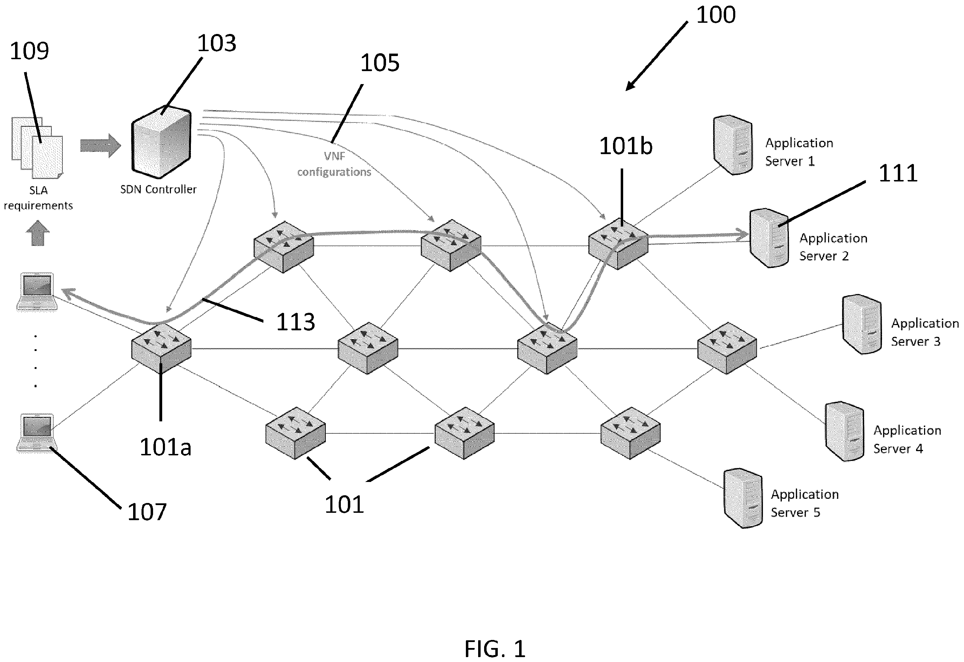

Figure 1 illustrates a software defined networking (SDN) network 100. SDN network 100 comprises a plurality of connected network nodes 101. A SDN controller 103 is connected to at least one of the nodes 101 of the SDN network 100. The controller 103 configures the SDN network 100, for example by deploying functions to the SDN network 100, such as Virtual Network Functions (VNFs) 105. The SDN network 100 connects to a plurality of user devices 107, for example via gateway node 101a. The functionality provided by the SDN 100 for a particular user is defined by a Service License Agreement (SLA) 109, and the requirements defined in the SLA 109 are fed into the SDN controller 103 to be implemented on the SDN network 100 as VNFs 105. Also connected to the SDN network 100 are a plurality of application servers 111. The SDN network 100 connects the user devices 107 to the application servers 111, allowing network traffic 113 to pass between them.

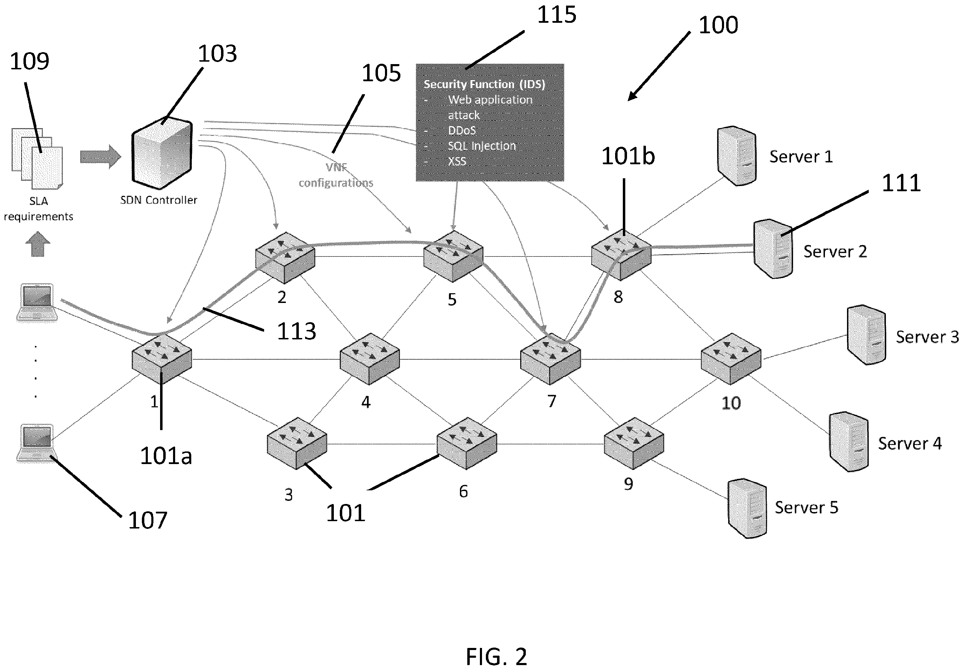

Adding a capability, such as a security capability (e.g., an Intrusion Detection System (IDS) function), into a SDN network 100 currently requires the deployment of a full-fledged security function with all of its capabilities and functionalities. For example, if an IDS function needs to be added, this would require the deployment of its core engine, attack signature knowledge base and other system-related components (e.g., a User Interface (UI) for adding new attack detection rules). The deployed security function will then be able to detect all cyber-attacks that are included in its knowledge base. To reduce the licence cost the security function may only be deployed onto a limited number of network nodes 101. Figure 2 shows an example where the IDS security function 115 is deployed on a single node 5. The SDN controller 103 will dynamically send the VNF configurations 105 or flow rules to the relevant nodes 101 (e.g. Node 1 and 2) such that all the user traffic that require the security function 115 be applied to it can therefore be routed through node 5.

In the example of Figure 2, the deployed IDS function 115 enables the detection of the following attacks passing through node 5: Web application, Distributed Denial of Service (DDoS), SQL injection and Cross Site-Scripting (XSS) attacks. Depending on which network node 101 a user device 107 and the destination service application 111 are connected to in the network 101, the traffic routing may induce some delays and increase latency which eventually might impact the overall QoS and a user's experience. This is because all traffic requiring the security function 115 must be routed through a single network node 101, in this case node 5. Furthermore, having the security function 115 deployed on a single node 101 or few number of nodes 101 may increase the risk of a single point of failure of the network 100 in case those network nodes 101 are overloaded or have been targeted by cyber-attacks themselves.

The present disclosure introduces the deployment of functions (e.g., security functions and/or micro functions) into an SDN network in order to improve overall network resilience and resource optimisation. A micro function represents a (small) subset of a full-fledged security function (e.g., a security function) such as an IDS or encryption function. An IDS micro function can, for example, implement the "SQL injection attack detection" function only.

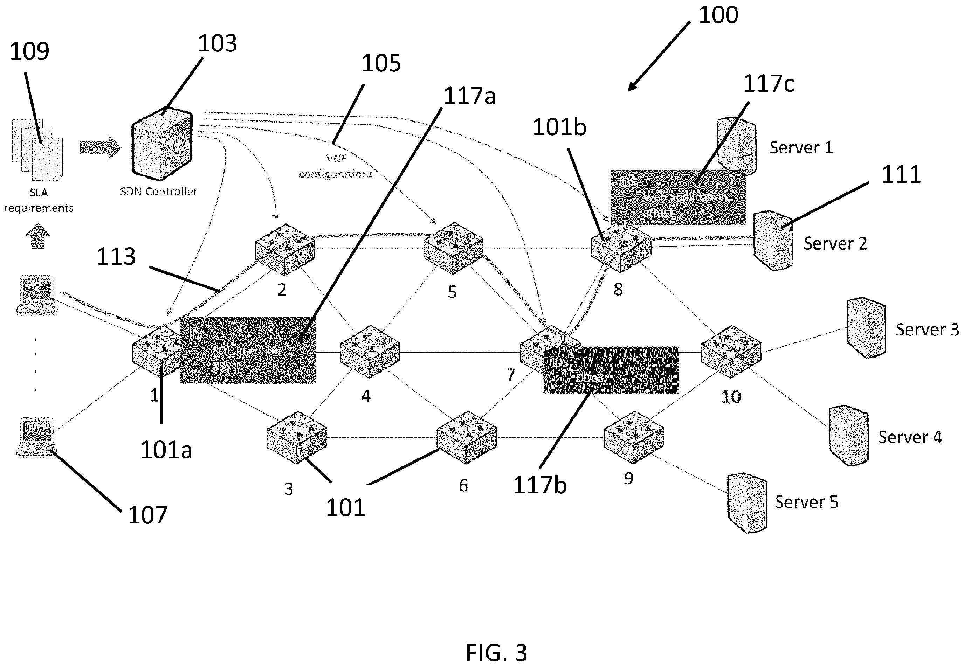

Figure 3 illustrates another SDN network 100. As illustrated in Figure 3, instead of deploying full-fledged IDS function 115 onto a single node 5 (as shown in Figure 2) the security function 117 is separated into multiple micro functions 117a, 117b, 117c that are deployed on different network nodes 101, i.e., node 1 for micro function 117a, node 7 for micro function 117b, and node 8 for micro function 117c. Note that the utilisation of micro functions 117a, 117b, 117c within a SDN network 100 should not be confused with micro service architecture which is a variant of the service-oriented architecture. Micro functions 117a, 117b, 117c are not providing services to users' or applications' requests via a programmable interface (API). Instead, micro functions 117a, 117b, 117c will be applied to network traffic 113 in order to filter, inspect or otherwise perform their functionality on the network traffic 113 based on certain criteria or objectives (e.g., to detect potential malware, perform functionality on certain types of network traffic 113, etc.).

In order to ensure that the required functionality, as defined in a SLA 109, is implemented on a SDN 100, the present disclosure also introduces a ticketing system to manage the operation of the distributed micro functions 117a, 117b, 117c within a SDN network 100.

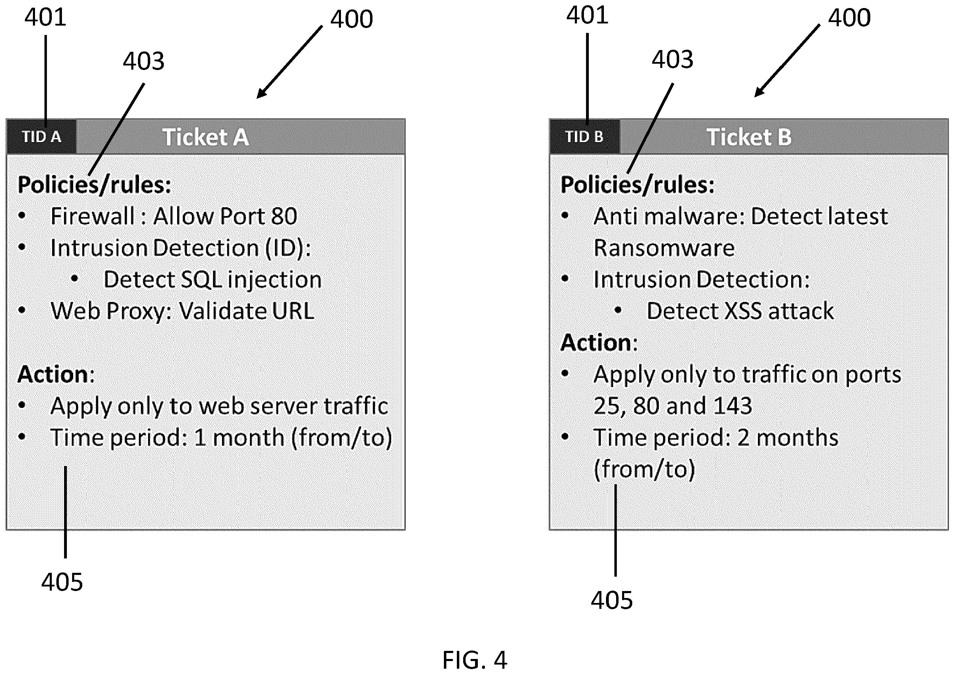

Figure 4 illustrates exemplary tickets 400. A ticket 400 is used to apply a select set of functions, including micro functions, to specified network traffic. This may be restricted to applying the functions for certain periods of time depending on the SLA. The combination of micro functions and ticketing system will allow the SDN network provider to offer customised services and increases the flexibility and adaptability of a SDN network. Such customised services include: malware inspections on user traffic coming from certain sources for a specific period of time; and detection of SQL injection/XSS/Ransomware attacks only on selected user traffic.

In general each ticket 400 specifies: the Ticket ID (TID) 401, which uniquely identifies a ticket 400 for particular user (or user group); policies and rules 403, which represent the set of functions that need to be applied on user traffic (e.g., an IDS micro function to detect SQL injection attack, an anti-malware micro function to detect the latest ransomware, etc.); and actions 405, which indicate how and when the specified functions (i.e., the policies and rules 403) need to be applied or executed on user traffic (e.g., apply micro functions to web server traffic for a period of one month, apply micro functions to all user traffic with destination ports 143 for two months, etc.).

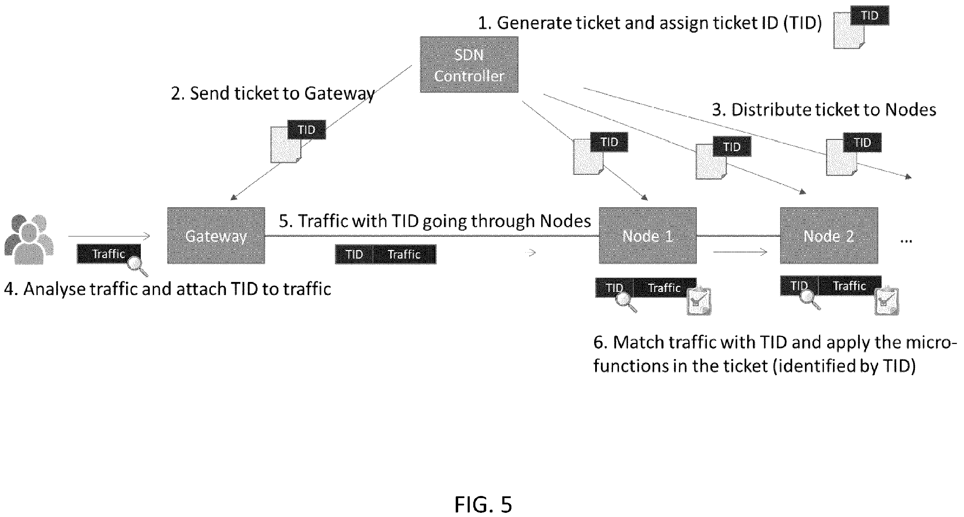

Each ticket is generated and processed within the SDN network in a particular manner, as illustrated in Figure 5.

The first step is to generate ticket and assign ticket ID (TID). Based on user requests and requirements (e.g., in a SLA) the SDN controller generates the ticket and assigns it a unique ticket identifier. The ticket specifies the required policies and rules in the sequential order which they need to be applied onto user traffic, as illustrated in Figure 4. For example, as specified in Ticket A of Figure 4, a Firewall micro function to allow traffic destined for port 80 has to be applied before the Intrusion Detection (ID) micro function for detecting SQL injection attack can be performed on the specified user traffic. The Web Proxy micro function to validate destination URL should then be applied afterwards.

The second step is to send the ticket to a suitable gateway node. Once the ticket is created, the SDN controller can then send it to the gateway node close to the user/customer. This is the network node of the SDN network where the user's network traffic will enter the SDN network.

The third step is to distribute the ticket, or at least the TID, to the nodes. In the first case, the SDN controller also distributes the ticket to relevant network nodes in the network enabling the nodes to determine the required functions to be performed directly. In the second case, the nodes can look up the required functions to be performed using the TID and querying the SDN controller or other ticket server which stores the tickets. The nodes that the ticket or TID are distributed to are preferably the nodes the user traffic may be routed through to arrive at its destination.

The fourth step is to analyse network traffic and attach the TID to the relevant network traffic. This is done by the gateway node, which analyses the network traffic (i.e., data packets) passing through it and tries to match them according to the ticket's traffic criteria, e.g., web traffic or port 22 traffic. In case of a match the gateway will attach the corresponding unique TID to the network traffic. That is, when network traffic that matches the criteria set out in a ticket passes through the gateway node, the gateway node attaches the TID to that network traffic (e.g., by appending it to a header of the network traffic).

The fifth step is to forward the traffic with the TID through the nodes of the SDN network. The traffic with attached TID is routed through the network nodes based on the configured routing table (i.e., traffic flow rules) and/or availability of the required functions or other criteria, such as node resource capacity.

The sixth step is to match the TID on network traffic to a ticket and apply the functions in the ticket. Each node may have received a number of tickets (in relation to different users, or different functions that need to be applied to different types of traffic from the same user, etc.) from the SDN controller previously. Hence, the node will try to match any available TIDs that it has received from the SDN controller with the one attached to the network traffic passing through it. In the case of a match, the node will apply the corresponding function to the network traffic as defined in the appropriate ticket (i.e., according to the "Action" information of the ticket).

The TID may be detached from the network traffic once it reaches the destination or leaves the SDN network. In this manner, the network traffic leaves the SDN network in its original form, enabling proper onward processing of the network traffic.

Additionally, each node may delete the expired tickets or TIDs after their expiry (e.g., after one month of the start date of Ticket A in Figure 4, or after two months from the start date of Ticket B in Figure 4).

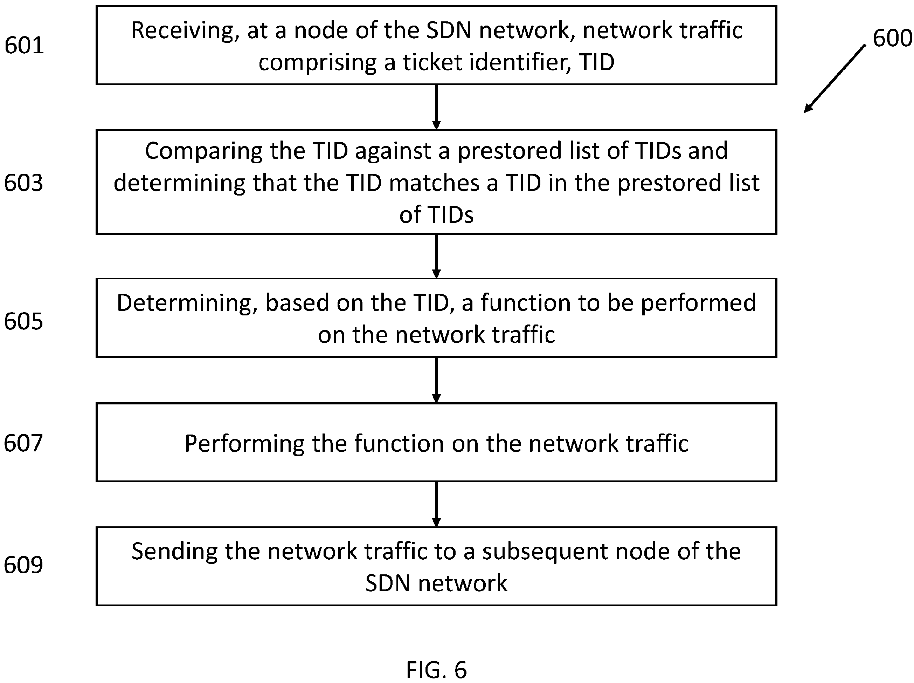

Figure 6 provides a flow chart of a method 600 for selectively performing a function on network traffic over a SDN network, following the principles discussed with relation to Figure 5. In particular, the method 600 of Figure 6 is a method performed at a node of a SDN network.

The method begins at step 601 in which network traffic comprising a TID is received at a node of the SDN network. At step 603, the TID is compared against a prestored list of TIDs (either in the form of tickets stored at the node or just a list of TIDs stored at the node) and it is determined that the TID matches a TID in the prestored list. Once a TID match is found, the method proceeds to step 605 during which it is determined, based on the TID, a function to be performed on the network traffic. This may be determined by looking at the ticket having a matching TID that is stored at the node, or by querying a remote database or server (e.g., a SDN controller) for the ticket corresponding to the TID. When it has been determined which function is to be performed on the network traffic, this function is performed on the network traffic at step 607. Finally, the node has finished its processing of the network traffic, other than to forward it onto a subsequent node in the SDN network, which it does at step 609.

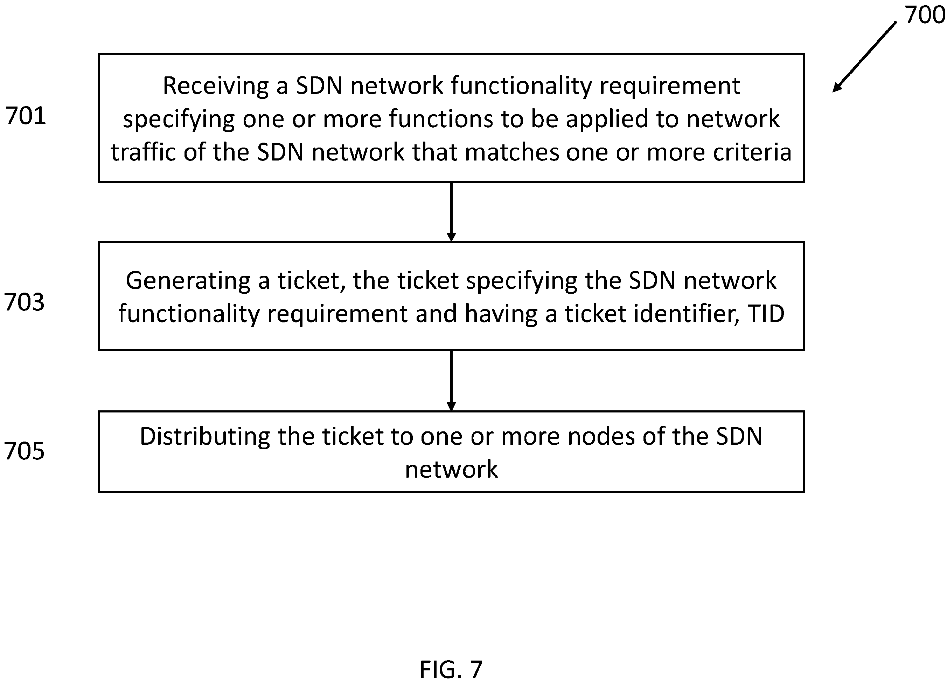

Figure 7 provides another flow chart of a method 700 for a SDN network, again following the principles discussed with relation to Figure 5. In particular, method 700 of Figure 7 is a method performed at a SDN controller.

Method 700 begins at step 701 wherein a SDN functionality requirement is received. The SDN functionality requirement (e.g., as set out in an SLA) specifies one or more functions to be applied to network traffic of the SDN network that matches one or more criteria. A ticket it then generated at step 703 which specifies the SDN functionality requirement and has a unique TID. This ticket is then distributed to one or more nodes of the SDN network at step 705.

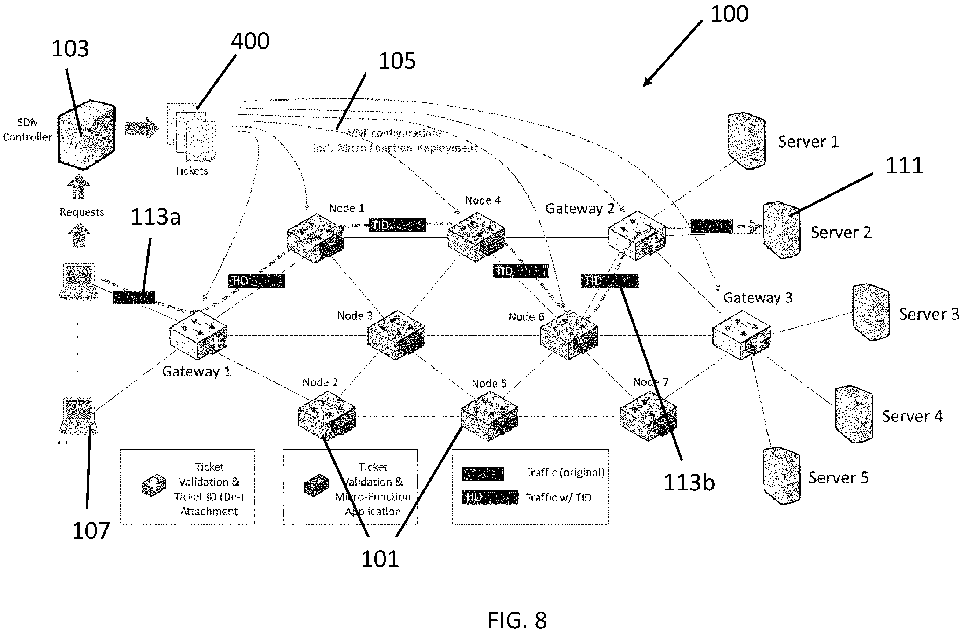

Figure 8 gives an overview of the SDN system 100 operation starting with users/hosts 107 send their requirements (e.g., an SLA) to the SDN controller 103. The SDN controller 103 generates tickets 400 based on these requirements, and creates and distributes the tickets 400 to the relevant gateway node, in this case Gateway 1. The SDN controller 400 then distributes the ticket 400 or at least the TID to other relevant network nodes 101. The SDN controller 400 can also distribute the required functions (e.g., the VNF configurations 105) to the network nodes 101.

When network traffic 113a enters Gateway 1 that meets the requirements set out in ticket 400, Gateway 1 attaches the corresponding TID to the network traffic 113a and forward this augmented network traffic 113b through the SDN network 100. The nodes 101 along the network path apply the specified functions to network traffic 113b traffic at multiple nodes 101, preferably one function per node 101. Finally, the TID is detached from the network traffic 113b prior to reaching its destination, server 111.

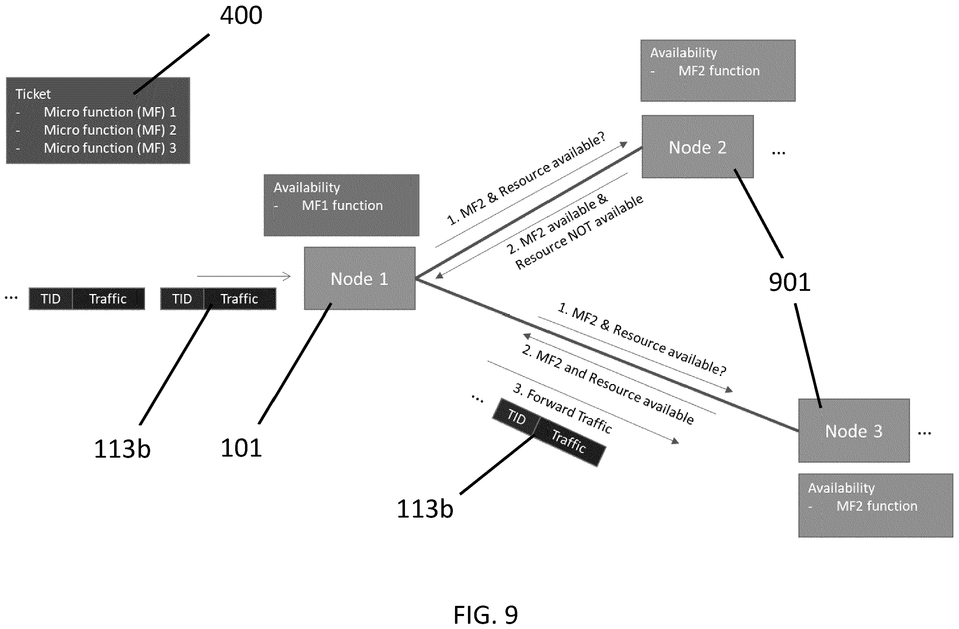

Each network node 101 that is routing the network traffic 113b may or may not apply any specified function onto the network traffic 113b; this depends on whether or not that network node 101 has been configured with the required function and whether the node 101 has enough computing resources to perform the function. All functions specified in the ticket 400 should be applied in sequential order before the network traffic 113b arrives at its destination. Hence, it needs to be ensured that this task can be completed by the relevant network nodes 101 that are routing the network traffic 113b. In order to achieve this, two exemplary approaches are considered. These approaches are summarised below, and explained further in relation to Figure 9.

Central approach - The SDN controller 103 has an overview of the availability of functions at each network node 101. Furthermore, it also keeps informed about the status of computing and network resources of each node 101 (i.e., CPU load, RAM usage, network throughput, etc.). This way, the controller 103 can send the routing information or flow rules to the relevant nodes 101 and ensure that all the functions will be applied according to the ticket's 400 specification. This approach can be easily implemented, but it may prove more challenging in a large scale SDN network 100 as it may then require higher computing resources at the SDN controller 103 and increase communication overhead between the SDN controller 103 and the nodes 101.

Distributed (or Node-by-Node) approach - The final decision to apply a specified function at a given node 101 will be taken by the node 101 currently routing and processing the network traffic 113b. After a node 101 has received network traffic 113b and applied the required function on it, the node 101 queries its connected nodes 101. These candidate (i.e., potential receiving) nodes 901 (according to a node's 101 routing table) are queried about the availability of the function next in the list as defined in the ticket 400 and whether or not the candidate node 901 has enough computing resources to apply the function. This approach assumes that there should be more than one possible candidate node 901 to forward the network traffic 113b to. This is a valid assumption as the SDN controller 103 normally configures multiple alternative paths to route the network traffic 113b to provide redundancy in the SDN network 100. This node-by-node approach is presented in more in Figure 9.

Figure 9 illustrates how a node 101, Node 1, can determine which candidate node 901 (Node 2 and Node 3) to forward network traffic 113b to. In the node-by-node approach, the forwarding of the network traffic 113b is based on the priority of the functions specified in the ticket 400, i.e., based on the sequential order in which the functions are to be applied. The network traffic 113b can be assigned a special flag or counter to indicate which function needs to be implemented next. For example, a counter having value "3" may mean that the third function specified in ticket 400 is the next function that needs to be applied, or alternatively that the third function specified in ticket 400 was the most recent function applied (and so the next function is the fourth function).

When a node 101 receives network traffic 113b, it will check the counter and determine which function should be applied next, e.g., if the preceding node has applied the second function from the list and so the counter is set to "2", then it is determined that the third function in the list is to be performed next on the network traffic 113b. Figure 9 shows an example implementation of the corresponding user traffic forwarding scheme:

In Figure 9, a ticket 400 specifies that three micro functions (MF1, MF2, and MF3) need to be applied on network traffic 113b.

Node 1 is configured to perform MF1 function while Node 2 and Node 3 are both configured to perform MF2 function. Node 1's routing table indicates that the network traffic 113b can either be routed through Node 2 or Node 3. Furthermore, it is assumed that all nodes 101, 901 have already received the ticket from the SDN controller which allows them to match the TID attached to the network traffic 113b.

The network traffic 113b arrives at Node 1 which then applies the MF1 function to the traffic in accordance with ticket 400. Node 1 is then ready to forward the traffic. The two possible nodes that Node 1 can forward the network traffic 113b to are identified as the candidate nodes 901. In this case, the candidate nodes 901 are Node 2 and Node 3. Initially, Node 1 does not know which of the candidate nodes 901 have been configured to be able to apply the next function specified in the ticket 400 (i.e., MF2) and whether the candidate nodes 901 have sufficient computing resources to perform the function.

To determine which candidate node 901 Node 1 should forward the network traffic 113b to, Node 1 sends a request to both candidate nodes 901 to query the availability of the MF2 function as well as the status of each candidate node's 901 (computing) resource capacity.

The candidate nodes 901, Node 2 and Node 3, respond as follows:

Node 2 responds that it has MF2 function but currently does not have sufficient resource capacity to perform it. Based on this response, Node 1 will not directly forward the network traffic 113b to Node 2 and wait for Node 3's response.
Node 3 responds that it has MF2 function and enough resource capacity to perform it. Based on this response, Node 1 will forward the network traffic 113b to Node 3.

Under this scheme, two further scenarios are possible:
If none of the candidate nodes 901 can apply the MF2 function, Node 1 will start forwarding the network traffic 113b to one of the candidate nodes 901 based on other priority criteria, e.g., towards the candidate node 901 with less traffic load or greater resource capacity. It is then the responsibility of that candidate node 901 (that receives network traffic 113b) to query all its connected nodes (according to its routing table) in the same manner to determine one that can perform the MF2 function (or to forward on again to a node with high resource capacity, if none of its connected nodes can apply the MF2 function).

If none of the candidate nodes 901 currently has the necessary computing resources to perform MF2 function, but does have the functionality, Node 1 will wait until one of those candidate nodes 901 becomes available (i.e., by regularly querying the candidate nodes 901 that have MF2 function capability) prior to forwarding the network traffic 113b to a candidate node 901. This may induce some delays in the network traffic 113b. This could be minimised by combining this node-by-node approach with the central approach. In that case, Node 1 can request the SDN controller to provide information about the network node(s) that can perform MF2 function as well as routing information to reach those nodes.

If multiple candidate nodes 901 have both the functionality to apply the next required function to network traffic 113b, as well as the resource capacity, it may be preferable for Node 1 to forward the network traffic 113b to the candidate node 901 that will be able to apply the next required function in the shortest time.

Machine learning techniques can be used to optimise the network traffic forwarding scheme described above to achieve this. This can avoid delays and congestion or SDN network or overload at the participating network nodes by making a well-informed decision on which node the traffic should be forwarded to. A machine learning (ML) model can be implemented in each node and trained to learn the correlation or causal relationship between the computing resource consumption for applying a specific function and the resulting traffic forwarding speed or throughput. By knowing the expected processing throughput of each of the candidate nodes that can receive network traffic, a forwarding node will then be able to forward the user traffic only to the node that can perform the required function without inducing too much delay.

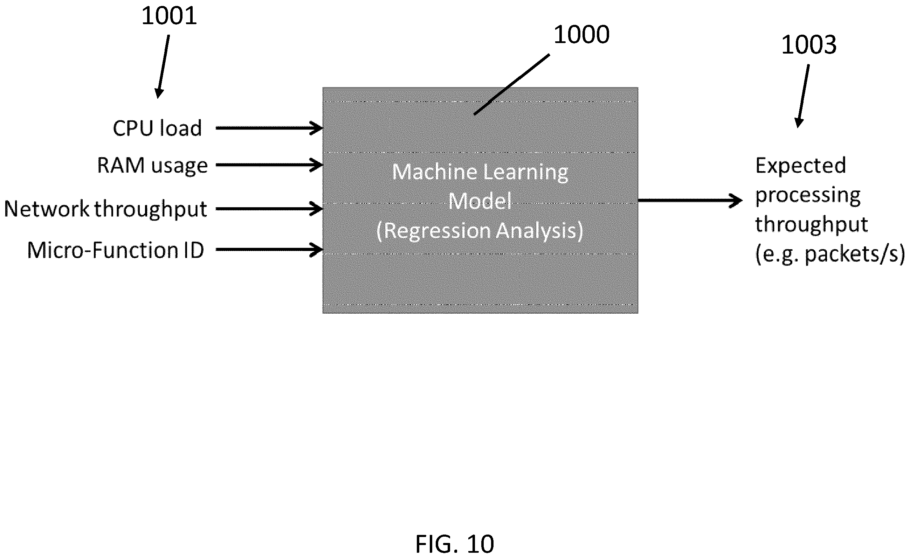

In essence, the ML model may correlate the time required for performing specific functions with the current state of the node (i.e., its computing and network resources, such as current CPU load, RAM usage, (inbound) network throughput, etc.). Each function may consume system and computing resources differently, e.g., a function for detecting malicious URL may use more resources than a function for filtering web traffic. Figure 10 provides a representation of a ML model 1000 that can be used to predict the expected function processing throughput, illustrating possible inputs 1001 and an output 1003 in data packets per second.

Each node can train or update its ML model 1000 by continuously monitoring its processing throughput and resource/network metrics while applying a particular function (identified by a function ID) to network traffic.

Regression analysis can be used to implement such a ML model. Regression analysis is a predictive modelling technique which investigates the relationship between a dependent ("target") and independent variable(s) ("predictors"). It tries to find the causal effect relationship between the variables. In this case the "target" can be the "function processing throughput" which indicates how much time a node would need to apply a specific function to certain amount of network traffic. The "predictors" can consist of the resource and network metrics along with a function identifier (which is used to uniquely identify a type of function with certain functionality). Hence each type of function will have its own regression model.

As there will likely be more than one independent variables (i.e., CPU load, RAM usage, network throughput, etc.) a suitable regression models include multiple linear regression and polynomial regression models. Such regression model depends on the node's system behaviour when performing specific type of function, i.e., how much computing resources are needed to execute the function. In a linear regression model the relation between the processing throughput and the computing/network resources are linear. The formula for a multiple linear regression is:

$$y = \beta_0 + \beta_1 X_1 + \beta_2 X_2 + \beta_3 X_3 + \cdots + \beta_n X_n + \varepsilon$$

The "target" is represented by the variable y, in this case being the throughput of the node when applying a particular function. The various inputs (the "predictors") are represented by the variables $X_i$, whilst the coefficients $\beta_i$ determine how each input affects the output. $\varepsilon$ represents the model's error. These coefficients will be determined and updated through the training of the regression model.

Linear regression can be expected to be a good model for such functions that do not require intensive computational efforts, e.g., a function to "apply firewall filter on port 80". However, other types of functions, for example, the ones that employ advanced statistical or machine learning techniques (e.g., to detect DDoS attack or malicious destination URL), could lead to non-linear relationship between the variables and hence polynomial regression models may be more useful. The formula for such polynomial regression, considering a single parameter $X_1$, is:

$$y = \beta_0 + \beta_1 X_1 + \beta_2 X_1^2 + \beta_3 X_1^3 + \cdots + \beta_n X_1^n$$

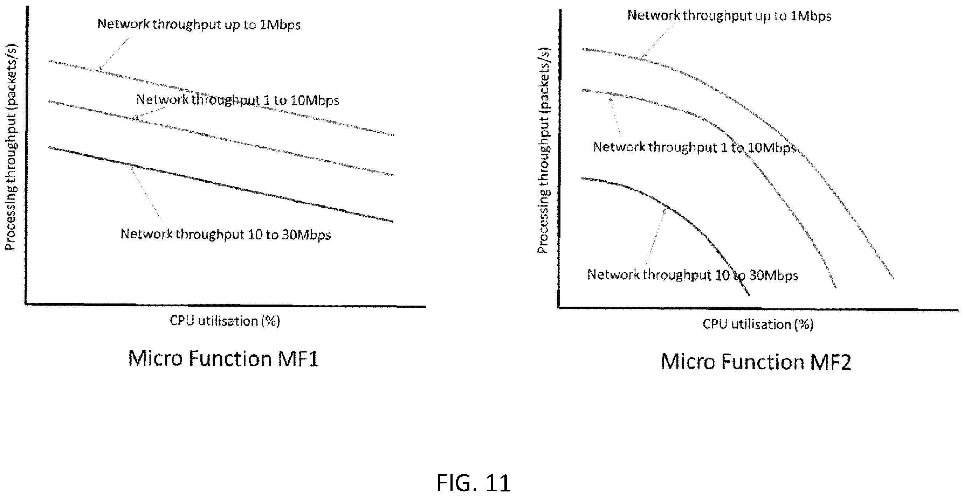

The type of regression model to be used can be determined during the initial learning phase by executing each type of function on sample network traffic at different CPU and network loads. The corresponding regression coefficients for producing the best-fit line for each independent variable can then be obtained. Software packages such as "Rstudio" or "Python's Sci-kit learn" can be used to generate and train such regression models. At the end of the learning phase, each network node would have generated a regression predictive model for each available micro function. Figure 11 shows examples of regression models for MF1 and MF2 functions, where MF1 uses a linear regression model and MF2 a polynomial regression model. The regression models can be regularly updated to improve their prediction accuracy as the node starts receiving and processing real user traffic.

A ML-based traffic forwarding scheme can then be implemented as follows. Prior to forwarding network traffic to one of the candidate nodes, the forwarding node will request information about the availability of a specific function (according to the ticket) and the predicted processing throughput from each candidate node.

If a candidate node has been configured to perform the requested function, it will use its inbuilt ML-model to get a prediction of the function throughput based on the current state of its computing and network resources (e.g., CPU load, network throughput, etc.). The predicted throughput is then sent back to the forwarding node.

The forwarding node collects the predictions received from all responding candidate nodes and compares the results. The forwarding node then forwards the network traffic to the candidate node that predicted the highest throughput.

Once the selected candidate node has started performing the function on the network traffic, it will keep monitoring its performance and resource metrics and, if necessary, update its ML-model for that particular function.

While the above ML implementation discussed each node having its own ML model, in practice this may not be necessary. Similar nodes (i.e., nodes that have similar hardware, processing capacity, network traffic, etc.) may be grouped together and a common ML model may be applied to each of them. This ML model could be run on the individual nodes, or on a central node (e.g., the SDN controller). This may reduce the computational burden on the individual nodes, and lead to an improved ML model because of the increased training data (i.e., data from multiple nodes rather than just one node).

It will also be appreciated that a "node", as discussed herein, may be any physical or virtual device that can receive a message from a network and send a message to another node on the network, such as a router. In particular, nodes may be devices that operate in layer 2 or layer 3 of the Open Systems Interconnection (OSI) model, also known as the data link layer and network layer respectively.

It will be appreciated that the ML models and ML-based traffic forwarding scheme disclosed herein, whilst discussed in the context of the particular SDN network described, can also be applied to other SDN networks, such as SDN network known in the art. Generally, the ML-based traffic forwarding scheme can aid in determining the next node to route network traffic to in a generic SDN network.

It will also be understood by those skilled in the art that the apparatuses that embody aspects of the invention, such as the nodes, could be general purpose devices (or groups of devices) having software arranged to provide the functionality described herein. Furthermore, any or all of the software used to implement the invention can be contained on various storage mediums such as a floppy disc, CD-ROM, or magnetic tape so that the program(s) can be loaded onto one or more general purpose devices, or could be downloaded over a network.

## Claims

1. A computer implemented method of selectively performing a function on network traffic over a software defined networking, SDN, network comprising:

   receiving, at a node of the SDN network, network traffic comprising a ticket identifier, TID;
   comparing the TID against a prestored list of TIDs and determining that the TID matches a TID in the prestored list of TIDs;
   determining, based on the TID, a function to be performed on the network traffic;
   performing the function on the network traffic; and
   sending the network traffic to a subsequent node of the SDN network.

2. The method of claim 1, wherein determining, based on the TID, a function to be performed on the network traffic comprises:
   obtaining a ticket corresponding to the TID of the network traffic, wherein the ticket specifies one or more functions to be performed on network traffic having that TID; wherein optionally the ticket is obtained from a local memory of the node or wherein the ticket is obtained from a database in response to a query comprising the TID.

3. The method of claim 2, wherein the ticket specifies an order for the one or more functions to be performed; and wherein the network traffic further comprises a counter indicating the next function that should be performed, wherein the counter is incremented each time a function is performed on the network traffic.

4. The method of any preceding claim, wherein sending the network traffic to a subsequent node of the SDN network comprises:
   determining a candidate node that can perform a next required function to the network traffic as the subsequent node, wherein the candidate node is a node directly connected to the node.

5. The method of claim 4, wherein determining a candidate node that can perform the next required function to the network traffic comprises determining whether the candidate node has the functionality to apply the next required function to the network traffic and/or determining whether the candidate node has a current resource capacity to apply the next required function to the network traffic.

6. The method of claim 5, wherein the method comprises receiving, from each candidate node, information indicating whether that candidate node has the required functionality to apply the next required function to the network traffic and whether that candidate node has a current resource capacity to apply the next required function to the network traffic.

7. The method of any of claims 4 to 6, wherein two or more candidate nodes are connected to the node, and wherein:

if at least one candidate node is determined as having the required functionality and current resource capacity to apply the next required function to the network traffic, that candidate node is determined as the subsequent node;

if at least one candidate node is determined as having the required functionality to apply the next required function to the network traffic but not a current resource capacity to apply the next required function to the network traffic, that candidate node is determined as the subsequent node but sending the network traffic to the subsequent node is delayed until the subsequent node indicates that it has the required resource capacity to apply the next required function to the network traffic; and

if no candidate node is determined as having the required functionality to apply the next required function to the network traffic, the candidate node having the highest resource capacity is determined as the subsequent node.

8. The method of any of claims 4 to 7, wherein if it is determined that two or more candidate nodes can perform the next required function, determining the candidate node capable of applying the next required function in the least time as the subsequent node.

9. The method of claim 8, wherein the candidate node capable of applying the next required function in the least time is determined using a machine learning model trained on previous applications of the function to network traffic; wherein optionally the machine learning model is one of a linear regression model and a polynomial regression model.

10. A computer implemented method for a software defined networking, SDN, network comprising:

receiving a SDN network functionality requirement specifying one or more functions to be applied to network traffic of the SDN network that matches one or more criteria;

generating a ticket, the ticket specifying the SDN network functionality requirement and having a ticket identifier, TID; and

distributing the ticket to one or more nodes of the SDN network.

11. The method of claim 10, further comprising:

determining one or more expected network traffic paths for network traffic that matches the one or more criteria;

wherein the ticket is distributed to one or more nodes that are on the one or more expected network traffic paths.

12. The method of claim 11, wherein the ticket is distributed further based on an expected traffic and resource capacity of each of the one or more nodes on the one or more expected network traffic paths .

13. The method of any of claims 10 to 12, further comprising distributing functions specified in the ticket to one or more nodes of the SDN network; wherein optionally functions are distributed to nodes along the expected network traffic path according to an order for the functions to be performed defined in the ticket.

14. A node for use in a software defined networking, SDN, network configured to perform the method of any of claims 1 to 9; or

a controller for a software defined networking, SDN, network configured to perform the method of any of claims 10 to 13; or

a software defined networking, SDN, network comprising a plurality of nodes and configured to perform the method of any preceding claim.

**15.** A computer program that, when executed by one or more nodes of a SDN network, is configured to cause the one or more nodes to perform the method of any of claims 1 to 9; or
a computer program that, when executed by a controller of a SDN network, is configured to cause the controller to perform the method of any of claims 10 to 13.

FIG. 1

FIG. 2

FIG. 3

**401** **400**

**403**

| TID A | Ticket A |
|-------|----------|

**Policies/rules:**
- Firewall : Allow Port 80
- Intrusion Detection (ID):
  - Detect SQL injection
- Web Proxy: Validate URL

**Action:**
- Apply only to web server traffic
- Time period: 1 month (from/to)

**405**

**401** **400**

**403**

| TID B | Ticket B |
|-------|----------|

**Policies/rules:**
- Anti malware: Detect latest Ransomware
- Intrusion Detection:
  - Detect XSS attack

**Action:**
- Apply only to traffic on ports 25, 80 and 143
- Time period: 2 months (from/to)

**405**

FIG. 4

EP 4 412 171 A1

FIG. 5

```
601    Receiving, at a node of the SDN network, network traffic
       comprising a ticket identifier, TID
```

```
603    Comparing the TID against a prestored list of TIDs and
       determining that the TID matches a TID in the prestored list
       of TIDs
```

```
605    Determining, based on the TID, a function to be performed
       on the network traffic
```

```
607    Performing the function on the network traffic
```

```
609    Sending the network traffic to a subsequent node of the
       SDN network
```

600

FIG. 6

EP 4 412 171 A1

700

| 701 | Receiving a SDN network functionality requirement specifying one or more functions to be applied to network traffic of the SDN network that matches one or more criteria |

| 703 | Generating a ticket, the ticket specifying the SDN network functionality requirement and having a ticket identifier, TID |

| 705 | Distributing the ticket to one or more nodes of the SDN network |

FIG. 7

FIG. 8

FIG. 9

FIG. 10

EP 4 412 171 A1

Micro Function MF2

Micro Function MF1

FIG. 11

Europäisches
Patentamt

European
Patent Office

Office européen
des brevets

# EUROPEAN SEARCH REPORT

**Application Number**

EP 23 15 4452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/248790 A1 (TAN SHIYONG [CN] ET AL) 30 August 2018 (2018-08-30) * paragraphs [0147], [0164], [0165], [0173], [0174], [0177], [0178], [0180], [0236] * | 1-15 | INV. H04L41/0895 H04L41/40 H04L43/20 H04L41/122 H04L9/40 |
| A | US 2019/222511 A1 (LOKMAN ERHAN [TR] ET AL) 18 July 2019 (2019-07-18) * paragraphs [0028], [0029] * | 1-15 | |

| TECHNICAL FIELDS SEARCHED (IPC) |
|---|
| H04L |

The present search report has been drawn up for all claims

| Place of search | Date of completion of the search | Examiner |
|---|---|---|
| Munich | 12 July 2023 | Agudo Cortada, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 15 4452**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-07-2023**

| Patent document cited in search report | | Publication date | Patent family member(s) | | Publication date |
|---|---|---|---|---|---|
| US 2018248790 | A1 | 30-08-2018 | CN | 107005485 A | 01-08-2017 |
| | | | EP | 3361684 A1 | 15-08-2018 |
| | | | RU | 2692042 C1 | 19-06-2019 |
| | | | SG | 11201803460T A | 30-05-2018 |
| | | | US | 2018248790 A1 | 30-08-2018 |
| | | | WO | 2017070970 A1 | 04-05-2017 |
| US 2019222511 | A1 | 18-07-2019 | NONE | | |

EPO FORM P0459

For more details about this annex : see Official Journal of the European Patent Office, No. 12/82